**Europäisches Patentamt**

**European Patent Office**

**Office européen des brevets**

(19)

(11) **EP 1 255 224 A1**

(12) **EUROPEAN PATENT APPLICATION**

(43) Date of publication:
**06.11.2002 Bulletin 2002/45**

(51) Int Cl.7: **G06N 3/063**, G06T 7/00,
G01N 21/88

(21) Application number: **01830289.3**

(22) Date of filing: **02.05.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **STMicroelectronics S.r.l.
20041 Agrate Brianza (Milano) (IT)**

(72) Inventors:
• **Spoto, Giuseppe
95037 San Giovanni La Punta (Catania) (IT)**

• **Branciforte, Marco
95100 Catania (IT)**
• **Doddo, Francesco
98057 Milazzo (Messina) (IT)**
• **Occhipinti, Luigi
97100 Ragusa (IT)**

(74) Representative: **Bosotti, Luciano et al
c/o Buzzi, Notaro & Antonielli d'Oulx
Via Maria Vittoria 18
10123 Torino (IT)**

(54) **A system and process for analysing surface defects**

(57) The system may be used for three-dimensional analysis of surface defects and microdefects performed by correlating two images of the surface according to the general criteria of stereoscopic vision. The system may be implemented by integrating, in a single monolithic component made using VLSI CMOS technology, an optical sensor with a cellular neural network comprising a matrix of cells configured as analog processors.

Fig_2

EP 1 255 224 A1

**Description**

Field of the invention

The present invention relates to the sector of analysis of surface defects of objects.

Background of the invention

Surface defects in materials are frequently the cause of sudden and almost always unforeseeable structural yielding which involves the drastic reduction in the intrinsic safety of each system, and consequently the safety of users.
The importance that quality control currently assumes in any production system involves the need to implement new systems of analysis that can yield efficient results in a short time so as not to weigh heavily on the economy of the controls themselves, which inevitably has a repercussion on the final cost of a product.
It is therefore evident that in applications in which safety and quality play a fundamental role it is necessary to ascertain beforehand the presence of defects in the materials, a factor upon which there depends the capacity of systems to perform their functions.
The most widespread techniques of analysis adopted fall within the class of non-destructive tests (NDTs), i. e., of testing that can be carried out also during the operation of systems without impairing their integrity.
At present, numerous techniques are used for non-destructive testing of systems. The most widely used techniques are:

- analyses using penetrants
- magnetoscopy tests
- ultrasound analysis
- fluoroscopy
- analyses using induced currents
- acoustic testing

Many of these techniques enable an acceptable degree of reliability to be achieved as regards identification of surface defects. However, every one of these techniques suffers from certain limitations. In fact, the use of the above techniques involves the need to possess adequate equipment, which is frequently costly and, in some cases, of unwieldy dimensions, and can be used only by specialized personnel.
In addition, the time necessary for identifying defects is often very long and has a direct bearing upon the economic aspects involved in testing. An example is represented by the materials used in aeronautic applications.
Added to the above limitations is the fact that frequently the execution of a test entails the disassembly of the piece that is to undergo analysis. A consequence of this is that it is impossible to carry out the control in the actual physical site where the piece is located during use, this being an aspect that affects the economic aspects of the test conducted.
At present there do not exist systems that are able to carry out non-destructive tests rapidly by analysing images of the object undergoing testing, detecting the presence of surface imperfections and characterizing them if they are present.
There exist on the market a number of systems of optical investigation at a microscopic level that emulate the stereoscopic technique, using two optical devices with parallel axes. However, such systems do not yield quantitative information on the dimensions of the object being analysed and, in particular, do not yield numerical indications on the third dimension of the image considered.
Other systems of optical investigation carry out a surface scanning of the object to yield the profile of the said object for a single section. These systems are, however, economically very costly and are not transportable.
At present, the operation of the systems that apply the technique of stereoscopic vision is based upon the identification of the conjugate points of the two images. However, the identification of these points represents the major difficulty in the application of the technique considered.

Summary of the invention

The purpose of the present invention is to provide a thoroughly satisfactory solution for three-dimensional analysis of the surface of objects.
According to the present invention, the above purpose is achieved thanks to a system having the characteristics called for specifically in the ensuing claims. The invention also regards the corresponding process.

Detailed description of the drawings

The invention will now be described, purely by way of non-limiting example, with reference to the attached drawings, in which:

- Figure 1 shows two images of a scene acquired from two different observation points;
- Figure 2 is a basic diagram of a system for three-dimensional analysis of the surface of an object, in accordance with the invention;
- Figure 3 illustrates, in the form of a block diagram, the modalities of use of a cellular neural network (CNN) in the framework of a system according to the invention;
- Figures 4, 5 and 6 are three flowcharts illustrating in detail the modalities of operation of a system according to the invention;
- Figures 7a and 7b show a sequence of images during the dynamic evolution of the system according to the invention;
- Figure 8 shows some images of a surface defect obtained applying the solution according to the invention;
- Figure 9 shows further images obtained applying the solution according to the invention; and
- Figure 10 shows the depth map of a surface defect detected in accordance with the invention.

Description of the theoretical foundations of the invention

Stereoscopic vision

In order to facilitate a more immediate understanding of the characteristics of the invention, some characteristics of the stereoscopy technique will be described in what follows.

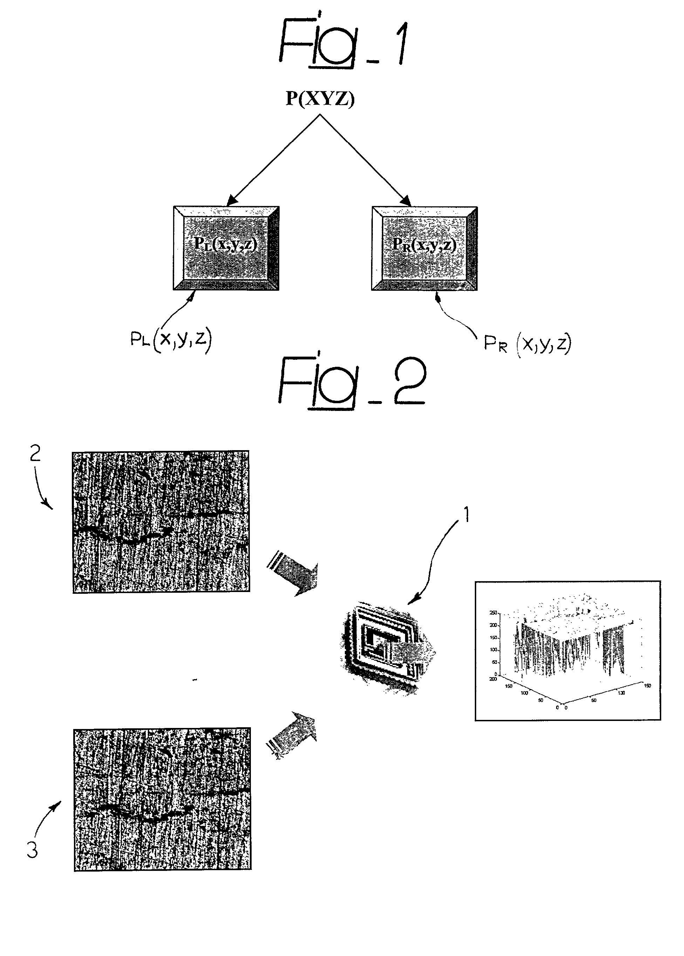

With reference to Figure 1, suppose that two initial images $P_L(x,y,z)$ and $P_R(x,y,z)$ of a scene are available, acquired from two different observation points. From these images (respectively, the left-hand image $P_L$ and the right-hand image $P_R$) it is possible to extrapolate information on the relative distance between the objects that make up the scene. In fact, if a point in space is acquired from different positions, it is projected onto the planes of the two images in positions that are different with respect to a reference system that is fixed with respect to the plane of the two images themselves.

Through correlation analysis there are identified, on the planes of the images, the relative positions of the two points corresponding to the single point in space of which they are the projections. Once the relative coordinates of the two points are known and the relative difference of abscissa between them - referred to as disparity - has been calculated, the "depth" of the single point in space with respect to the plane of the images is derived by applying the following formula:

$$Z = \frac{B \cdot f}{x_{left} - x_{right}} \tag{1}$$

where Z is the depth factor, B is the relative distance between the two points of acquisition of the left-hand image and of the right-hand image, and f is the focal distance characteristic of the system of lenses used for acquisition, whilst $x_{left}$ and $x_{right}$ are the coordinates of the point acquired in the left-hand image and in the right-hand image, respectively.

The formula given above applies, for instance, to the case in which detection is carried out using an optical sensor (telecamera), which is translated so as to be displaced from one pixel to another, remaining on the same row. For this reason, the coordinate present in the formula is only the x coordinate, and the formula regards the said translation.

The main difficulty in applying this technique lies, as has been said, in identifying the points correlated in the two images. To determine these points, it is possible to use different techniques that take into account the levels of brightness of the pixels of the two images and their respective neighbourhoods.

An example of the technique of correlation between conjugate points is described by the following formula:

$$C_{12}(\tau) = \frac{1}{k} \sum_{u_1=-N}^{+N} \sum_{v_1=-P}^{+P} \left( I_1\left(u_1 + u_0, v_1 + v_0\right) - \overline{I_1\left(u_0, v_0\right)} \right) \cdot \left( I_2\left(u_1 + u_0 + \tau, v_1 + v_0\right) - \overline{I_2\left(u_0 + \tau, v_0\right)} \right)$$

where $C_{12}$ is the value of correlation between the pixels of image 1 (the left-hand image, for example) and the pixels of image 2 (the right-hand image), $\square$ is the variable that compares all of the pixels of the two images, $I_1$ and $I_2$ represent the intensity of brightness of the pixels belonging to the two images (the neighbourhood considered of each pixel is equal to N x P pixels), and k is a factor that depends upon the standard deviation of the levels of brightness of the neighbourhood of each individual pixel.

At the maximum value of correlation, the coordinates of the conjugate points are determined, and hence the disparity between the said points that is necessary for calculating the depth.

The algorithmic solutions described present a non-indifferent computational burden. Consequently, to use them according to traditional schemes very powerful systems of calculation are required, which often entail long analysis times.

Cellular neural networks

The solution according to the invention makes it possible to overcome the aforesaid drawback thanks to the high speed of calculation that cellular neural networks (CNNs) afford in processing signals, in particular images.

For a general illustration of the characteristics of a cellular neural network, useful reference may be made to the document US-A-5 140 670.

The architecture according to the invention uses cellular neural networks for identifying and characterizing the defects present in them through techniques of stereoscopic vision. These techniques can thus be introduced also into modern production systems, without adversely affecting performance in terms of production rates and costs.

As is known also from US-A-5 864 836, a cellular neural network is a system that consists of elementary cells that operate continuously in time, arranged with state variables connected to the neighbouring cells in one-, two- or three-dimensional space.

This system can be considered a programmable parallel processor capable, in particular, of being used in a wide range of applications in the image-processing field. In addition, the system may be rendered self-adaptive with the addition of appropriate circuits.

A type of processing carried out by a given cellular neural network depends upon the extent (magnitude and sign) of the interactions that exist between the cells. Consequently, the system is programmable in so far as it is possible to vary, during the operating phase, the values of the interactions.

The implementation of two-dimensional cellular neural networks draws advantage from the planar topology of the system itself for the reason that these networks can be implemented using electronic and opto-electronic technology.

In a particularly advantageous way, the architecture of a cellular neural network comprises a matrix of cells that are locally interconnected through synaptic connections, and this matrix thus has a spatial distribution which, by its very nature, is substantially correlated to the matrix form of the processed images, in particular in a system that is based upon the criteria of stereoscopic vision.

The solution according to the invention has recourse, for processing of the signals, to a cellular neural network, thus avoiding digitization of the image, a fact which enables, all other factors being equal, a considerable increase in the processing speed with respect to the sensors that require digitization of the image signal.

In particular, the solution according to the invention makes it possible to create the system for acquisition and processing of the corresponding signals in the framework of a single chip.

Cellular neural networks are generally based upon conventional VLSI techniques and in particular upon CMOS technology. A system according to the invention can be easily built in a system-on-chip (SOC) configuration, whereby the entire system for acquisition and processing of the images is integrated on a single chip, for example using VLSI CMOS technologies.

In this connection, reference may be made to the article by Rodriguez-Vasquez *et al.,* "Review of CMOS Implementations of the CNN Universal Machine-Type Visual Microprocessors", published in the Proceedings of ISCAS 2000 (IEEE Int. Symposium on Circuits and Systems), Geneva, May 28-31, 2000. A solution that envisages an optical input integrated in the device is the one described by Espejo *et al.* (IEEE Journal of Solid-State Circuits, SSC-29 (8), pp. 895-905; 1994).

In the currently preferred embodiment, the invention relates to a system that comprises an optical microsensor 1, built using CMOS technology, capable of carrying out real-time analysis of the input information.

The optical interface of the system is made up of a matrix or array of sensors with inputs on rows and columns governed by an internal logic control. The invention thus enables a system to be built monolithically integrated on a semiconductor for automatic three-dimensional analysis of images coming from the surfaces of objects.

The aforesaid system is based upon microarrays of the type comprising optical sensors arranged in matrix form for the acquisition of the images and an architecture for parallel analog processing of high computational efficiency, based upon the use of a cellular neural network (CNN)

The aforesaid processing is basically of an analog type and is performed in a spatially distributed way over the entire development of the microarray matrix

According to the invention, once certain parameters have been fixed, the dynamic system is allowed to evolve from the initial state to the stable final state, and the resulting image is stored in a local memory.

When the image has been completely acquired, it is stored internally as a voltage value (pixel by pixel).

The general criteria that enable configuration of the sensor 1 as an optical sensor that is able to produce the aforesaid image are to be deemed in themselves known in the art and hence such as not to require a detailed description herein, also because these criteria do not, in themselves, constitute elements that are essential for understanding the invention.

The level of luminosity or brightness of each pixel of the image is processed by an element of the grid which, as a whole, makes up the acquisition system.

As has already been said, the sensor 1 is preferably built using CMOS technology so as to comprise an optical chip consisting of a matrix of photosensors with inputs on rows and columns governed by an internal logic control.

The sensor 1 comprises an "analog" part containing n x m cells, each with an optical sensor of its own for a respective pixel.

The aforesaid sensor is thus able to generate, in a known way, a first image signal 2 and a second image signal 3 organized according to pixels, which represent, respectively, a first surface image and a second surface image in which the aim is to proceed to locating and identifying possible defects. In particular, as will be better appreciated from what follows, the aforesaid two images may correspond to two images, detected from the same observation point, of a moving object.

To carry out real-time processing of the input information, each pixel is locally connected to a process unit or cell which implements a state equation of the type appearing below:

$$C\frac{dv_{xij}(t)}{dt} = -\frac{1}{R_x}v_{xij}(t) + \sum_{C(k,l)\in N_r(i,j)}A(i,j;k,l)\cdot v_{ykl}(t) + \sum_{C(k,l)\in N_r(i,j)}B(i,j;k,l)\cdot v_{ukl}(t) + I_{bias}$$

where $v_{xij}$ and $v_{uij}$ are respectively the initial state and the input voltage of the individual cell, indicated by $C_{ij}$ ; $N_r$ (i,j) is the neighbourhood of unit radius of the individual cell; and A, B and $I_{bias}$ are parameters the values of which influence the behaviour of each individual cell in the processing of the acquired image.

In particular, A and B are matrices of dimensions 3 x 3, and $I_{bias}$ is a single value. The equation appearing above refers to the general paradigm, described in US-A-5 140 670, of cellular neural networks introduced by Chua and Young and represents the state of the art as far as the technology regarding image processing is concerned.

In particular, in the architecture diagram of Figure 3, the reference number 11 designates the array (typically a matrix array) of analog cells comprising the optical sensors $Q_{ij}$ , said cells being interconnected locally to the adjacent cells through a i.e., the factors A, B and $I_{bias}$ mentioned previously, which constitute the parameters of configuration of the neural network.

The reference number 12 designates an internal analog memory for temporary storage of the intermediate values of the cells.

The reference number 13 designates a complex of digital registers for storing the programming and configuration parameters that are to be transmitted to the array 11 after prior conversion into analog format performed by means of a digital-to-analog converter 14. The reference number 15 designates a program digital memory (configured, for example, as a flash, EPROM or SRAM memory with external memory interface), whilst the reference number 16 designates a control logic that drives all the elements of the architecture, with the further possibility of acting as a decoder during the operation of reading of the processing results generated in the array 11 of analog cells. Finally, the reference number 17 designates the complex of the input/output circuits (both of an analog type and of a digital type) designed to provide the interfacing towards the outside world and the programming of the chip.

The modalities of interaction between the blocks 11 to 17 (which are, on the other hand, evident for a person skilled in the sector) are indicated by the arrows - single-headed arrows or double-headed arrows - represented in the same Figure 3.'

Basically, each processing step is performed by fixing known values of the parameters referred to above and letting the system evolve in a dynamic way from an initial state to the stable final condition, and then storing the resultant image in the local memory.

As is known (see, for example, the CNN Software Library - Templates and Algorithms — Version 7.3, ANL, Budapest, August 1999), in the case of the so-called universal CNN machines operating procedures are implementable both on single images and on double images.

Once the image has been completely acquired (with an acquisition time that depends upon the resolution of the chip and upon the corresponding technology), it is stored internally as a set of voltage analog values (pixel by pixel), which are then to be processed directly on the chip with the proposed architecture.

The architecture of the system considered for determining the three-dimensional characteristics of the surface of objects comprises:

- a matrix of analog processors (cells) comprising the optical acquisition sensors; each cell is connected to all the cells surrounding it, and interacts with. them through appropriate programmable-parameter values and threshold values, i.e., the so-called templates;
- an analog internal memory for temporary storage of the values assumed by the cells (images);
- digital registers for storage of the programmable parameters and of the digital-to-analog converters (DACs) ;
- programmable digital memories (such as EPROM, flash, and SRAM memories);
- logic controllers of peripherals, which act as decoders of information coming from processes carried out by the cells of the circuit on the images considered; and
- input/output (I/O) circuits for interfacing the chip and enabling its external programming.

Each process consists of a series of operations executed on the basis of the values of the initial parameters entered. The system evolves dynamically from an initial state up to a condition of stability the characteristic values of which corresponding to the images acquired are stored in local memories.

Thanks to the use of on-chip analog memories, it is possible to acquire two different images (a right-hand one and a left-hand one) in a very short time, also according to the speed of movement of the object in which the aim is to detect the possible presence of surface defects.

An example is represented by the images of a piece on a conveyor belt moving at a constant speed. Each input image is stored internally, associating to each pixel thereof a voltage analog value attributed then to each cell of the grid. Processing of the signals takes place according to the architecture described.

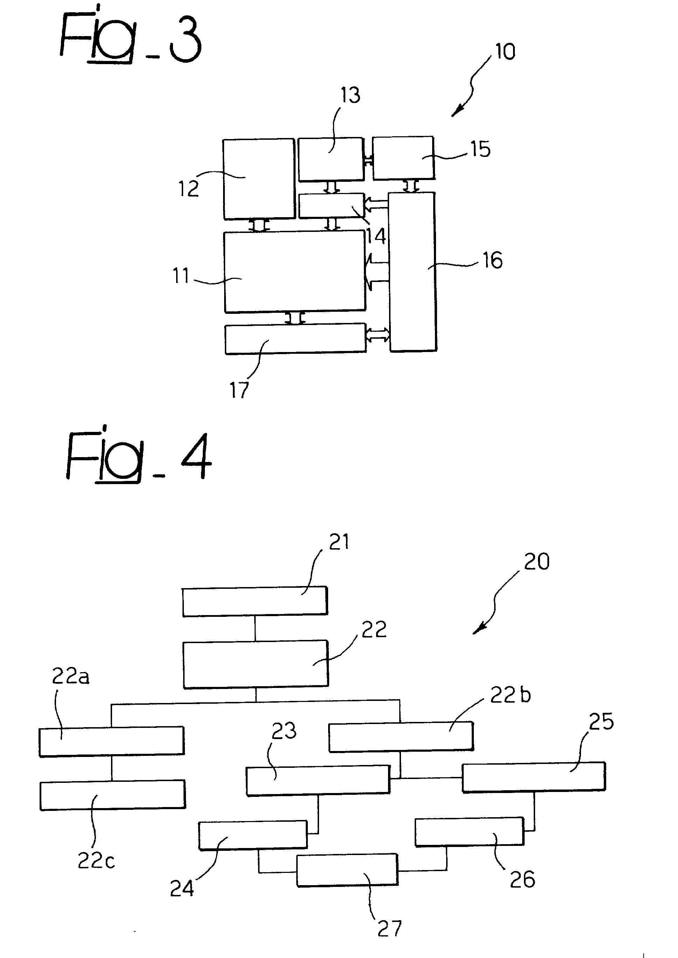

In the currently preferred embodiment of the invention, the proposed system implements the methodology of automatic analysis represented schematically in Figure 4. This methodology, designated as a whole by 20, comprises the following operations:

- acquisition 21 of the stereoscopic images of the object;
- application 22 of a first *defect-detection algorithm;*
- output 22c, if the defect-detection algorithm has given a negative answer 22a;
- application 23 of the same defect-detection algorithm, if it has given a positive answer 22b, to identify the surface characteristics of the defect 24;
- application of a further algorithm 25 *(stereo algorithm)*, designed to determine the information on the depth of the defect; and
- presentation of a final report 27 summarizing the dimensional characteristics of the defect.

Identification of the defect is performed through a technique (in itself known) of characterization of the static image - whether this be the right-hand one or the left-hand one - in order to determine the presence or otherwise of a surface defect.

For this purpose, it is sufficient to carry out simple operations of thresholding, contour detection, noise removal, hollow filling and calculation of the sum of the pixels that remain active. If the number of pixels remaining active is sufficiently high, it may be inferred that there is a defect present.

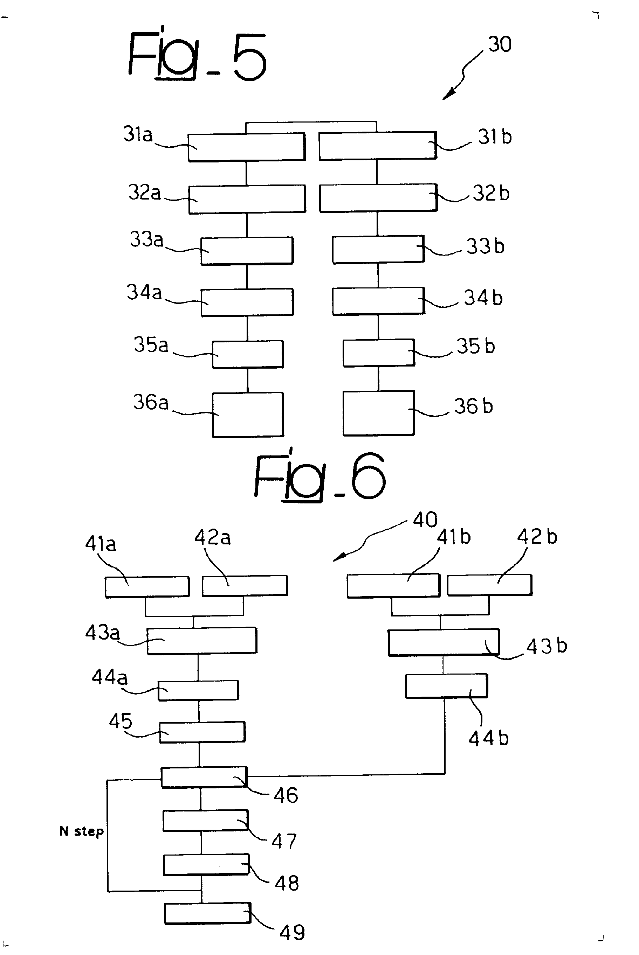

The defect-detection algorithm, designated as a whole by 30 in Figure 5, consists, in the application, to the initial images, designated by 31a and 31b, of a series of templates purposely designed to extract the defect and isolate it from the rest of the image.

Presented in what follows, by way of non-limiting example, are the templates used in an example of application of the algorithm itself, in conditions of non-controlled illumination, for the purpose of identifying and characterizing a surface defect like the one caused by cyclic stresses on a mechanical member.

In particular, the templates appearing below refer to the implementation of the coefficients A and B of the cellular neural network in the form of 3 x 3 matrices.

*a) Edge-Detection Template (32a and 32b)*

This operation enables extraction of the contours of the defect.

$$A = \begin{bmatrix} 0 & 0 & 0 \\ 0 & 2 & 0 \\ 0 & 0 & 0 \end{bmatrix} \quad B = \begin{bmatrix} -1 & -1 & -1 \\ -1 & 8 & -1 \\ -1 & -1 & -1 \end{bmatrix} \quad I_{bias} = -0.5$$

*b) Erosion Template (33a and 33b)*

This is used for eroding the objects of larger dimensions, eliminating a part of the noise present.

$$A = \begin{bmatrix} 0 & 0 & 0 \\ 0 & 0 & 0 \\ 0 & 0 & 0 \end{bmatrix} \quad B = \begin{bmatrix} 0 & 1 & 0 \\ 0 & 1 & 1 \\ 0 & 0 & 0 \end{bmatrix} \quad I_{bias} = -2$$

*c) Small-Object-Remover Template or Small Killer (34a and 34b)*

This removes the objects of smaller dimensions, eliminating the noise present in an isolated form.

$$A = \begin{bmatrix} 1 & 1 & 1 \\ 1 & 2 & 1 \\ 1 & 1 & 1 \end{bmatrix} \quad B = \begin{bmatrix} 0 & 0 & 0 \\ 0 & 0 & 0 \\ 0 & 0 & 0 \end{bmatrix} \quad I_{bias} = 0$$

*d) Dilation Template (35a and 35b)*

This performs a reconstruction of the image, restoring the defect to its original dimensions:

$$A = \begin{bmatrix} 0 & 0 & 0 \\ 0 & 0 & 0 \\ 0 & 0 & 0 \end{bmatrix} \quad B = \begin{bmatrix} 0 & 0 & 0 \\ 1 & 1 & 0 \\ 0 & 1 & 0 \end{bmatrix} \quad I_{bias} = 2$$

In this way, the characteristics of the defect are determined (resulting images, designated by 36a and 36b).

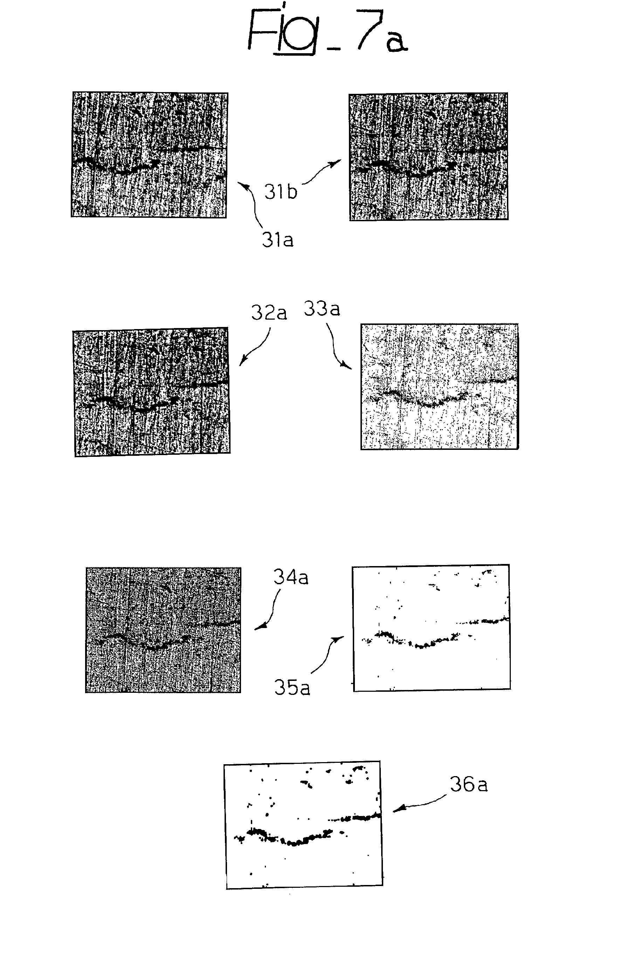

Figure 7a shows, in addition to the "first" image 31a and the "second" image 31b, the results of the application of the templates 32a, 33a, 34a and 35a, described previously, to the first image of the defect, acquired with a system of lenses with x50 magnification, the aim being to arrive at a resulting image designated by 36a.

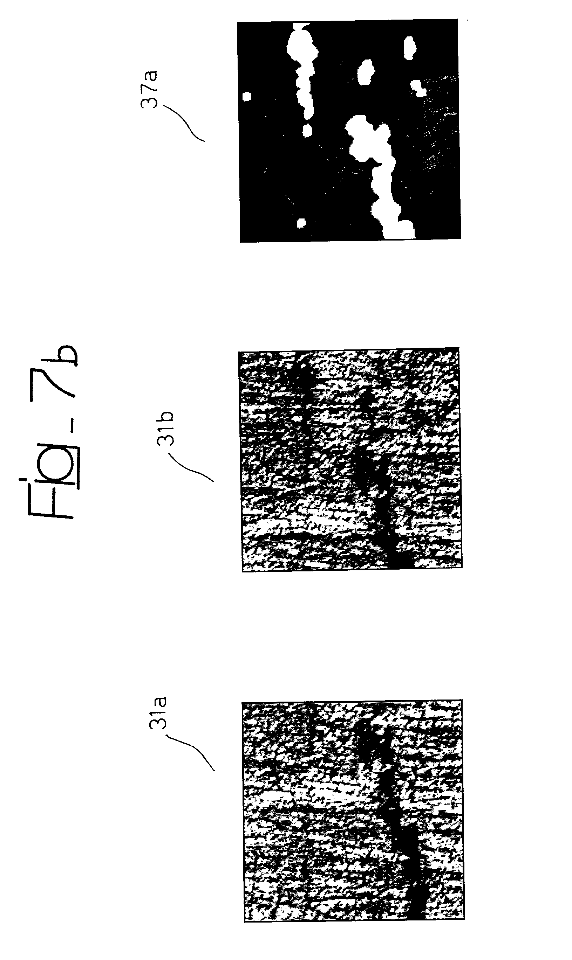

Figure 7B shows the mask of the first image obtained by applying the defect-detection algorithm.
Application of the defect-detection algorithm enables isolation of the defect from the rest of the image and determination of its surface extension.
The next step consists in determining a map of the depth of the defect. To do so, it is necessary to identify, for each pixel of the first image, the corresponding pixel of the second image, calculate the disparity between the two correlated points, and calculate the depth of the defect by applying the corresponding formula.
Determination of the correlated points is made by applying the stereo algorithm illustrated in Figure 6 with reference to its application to a portion of the defect analyzed previously.
Given the initial images 41a and 41b and the ones determined by applying the defect-detection algorithm, i. e., the ones designated by 42a and 42b, the latter two images are superimposed on the former images, using them as masks. In this way, masked images 43a and 43b are obtained, in which the disturbance present in the acquired images has been eliminated without modifying the shades of grey where the defect is present, in order not to alter the levels of depth of the defect in the two starting images.
Application of the masks to the original images 41a and 41b also prevents determination of correlated points external to the defect itself, which may generate errors in the calculation of the disparity. Since the starting images are acquired without any control over the source of illumination, there is always present noise, which could generate errors in the determination of the corresponding points.

Isolation of the defect with its own levels of brightness is performed by applying repeatedly a template, known as *Figdel template.* Application of this template to the masked images 43a and 43b enables cancellation of all the elements of the scene, leaving the masked elements unaltered, i.e., the ones located where the defect is.

In the example given, only one part of the image on which the depth map has been determined is considered.

Using the same formalism adopted previously, the template in question can be defined, as is specified in what follows.

*Figdel Template (44a* and *44b)*

This cancels out the objects of the scene, leaving unaltered the ones on which the mask is applied.

$$A = \begin{bmatrix} 0 & 0 & 0 \\ 0 & 1 & 0 \\ 0 & 0 & 0 \end{bmatrix} \quad B = \begin{bmatrix} -1 & -1 & -1 \\ -1 & 1 & -1 \\ -1 & -1 & -1 \end{bmatrix} \quad I_{bias} = -8$$

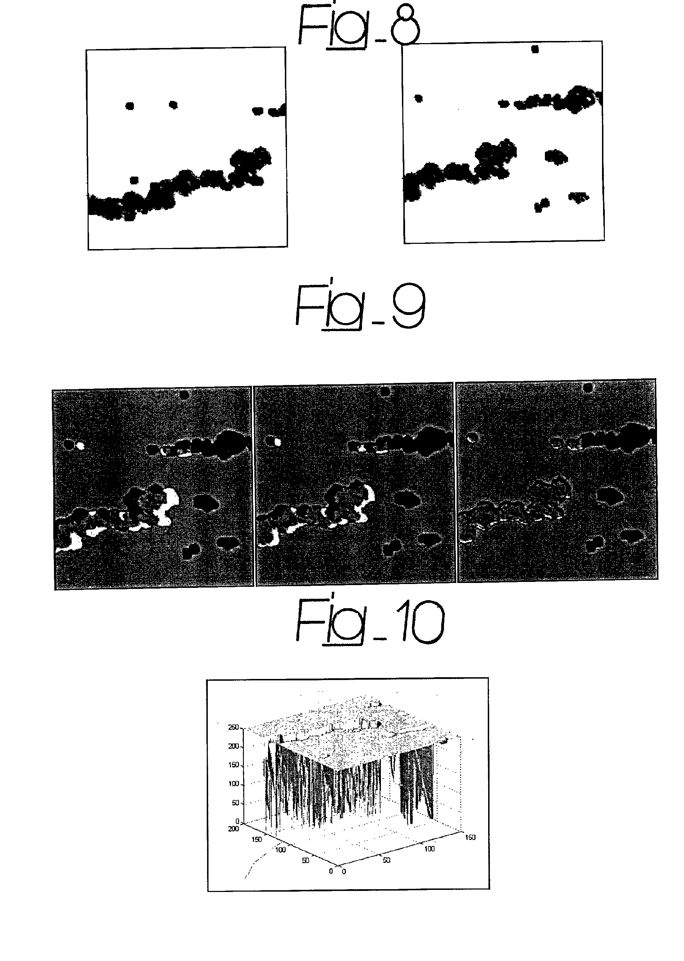

By applying the template in question repeatedly each of the two masked images, the images shown in Figure 8 are obtained. These are free from elements of disturbance but present shades of grey that are unaltered with respect to the initial images where the defect is located.

Determination of the correlated points is made by considering a series of images that originate from translating (step 45) the left-hand image until it is superimposed on the right-hand image (of course, superimposition of some portions of the images is not possible on account of the absence in one image of some pixels that are present in the other image) and by calculating the difference (step 46), pixel by pixel, between the right-hand image and each of the images obtained by translating the left-hand image.

In this way, a series of difference images are obtained (see Figure 9) on the basis of which the pixels having, amongst the series of images, a minimum value are determined (step 48).

It is possible then to proceed to applying yet another template 47, with an averaging function, known as Average Template.

If once again recourse is had to the formalism already adopted a number of times in the course of the present description, the template in question can be defined, as emerges in what follows.

*Average Template (47)*

This operation makes an average of the levels of brightness of the surrounding area or neighbourhood, attributing the value thereof to the central pixel of the said area, as follows:

$$A = \begin{bmatrix} 0 & 1 & 0 \\ 1 & 2 & 1 \\ 0 & 1 & 0 \end{bmatrix} \quad B = \begin{bmatrix} 0 & 0 & 0 \\ 0 & 0 & 0 \\ 0 & 0 & 0 \end{bmatrix} \quad I_{bias} = 1$$

The above are the corresponding pixels and hence the pixels correlated between the two images. If the amount of the translation at the point corresponding to the minimum value found is known, the value of the disparity between the correlated pixels is accordingly determined.

By repeating the same process for each pixel of the defect, a complete map of the depth of the defect is determined (step 49).

As an example of the application presented, a number of difference images are shown in Figure 9, whilst Figure 10 presents the depth map determined in an area corresponding to the deepest area of the defect.

The indications of the depth are given according to a scale factor. This must take into account both the focal distance for the system of lenses through which the images are acquired and the relative translation of the two images.

The methodology proposed presents numerous advantages in the conduct of non-destructive tests and quality-control tests, and moreover affords a wide range of possibilities of application.

The main advantages deriving from the use of the solution according to the invention are numerous. One of the advantages is the high speed of processing of the images - this being a characteristic of cellular neural networks - which makes it possible to obtain in real time the results of the processing. In fact, no analog-to-digital conversion (or vice versa) is necessary of the values of each pixel of the image acquired at output from the optical sensor with respect to the processing matrix operating in parallel, which executes the image-analysis algorithm of the microarray.

In this way, it is possible to overcome the intrinsic limit of current techniques of analysis, which require long processing times.

A further advantage is the possibility of operating just where the component being examined is used, provided that this is located in a position where it can be seen by the operator.

It is also possible to re-program the system in a simple way by means of a few coefficients that define the templates of the cellular neural network, corresponding to the individual operations stored in the internal memory of the system, in points corresponding to the values of the synaptic connections between adjacent cells.

The system can moreover be applied directly in the production environment in order to investigate the quality of mass-produced articles.

Finally, the method described is very robust, however critical may be the aspects linked to the sources of illumination: the two images are in fact acquired simultaneously in the same lighting conditions.

A possible application of the solution according to the invention is that of quality control of objects or pieces undergoing fabrication/processing. In particular, the solution according to the invention is ideally suited to the implementation of sytems capable of acquiring, with a certain frequency, images of an object that is being fed along a conveyor, such as a belt conveyor, or any other system of movement.

In the latter application, it is usually sufficient to acquire the images by means of a single optical sensor, which, exploiting the translation of the pieces and acquiring the images with a frequency that is linked to the translation of the pieces, in practice makes the double image acquisition which is necessary for applying the stereoscopic technique.

In this connection, it may be further noted that none of the known systems makes use of an optical output and/or of the possible reconfigurability (control) by means of optical signals. As regards programmability, it will moreover be noted that that the known systems that envisage programmability only furnish the possibility of implementing a discrete set of values for the weights of connection between the cells. Programming is always via electrical signals, and normally each cell should be programmed (controlled) in an identical way to all the others.

Of course, without prejudice to the principle of the invention, the details of implementation and the embodiments may vary widely with respect to what is described and illustrated herein, without thereby departing from the scope of the present invention as defined in the annexed claims.

**Claims**

1. A system for the analysis of surface defects in objects, said system being associatable to an image sensor (1) that is able to generate at least one first image signal (2) and one second image signal (3) for the surfaces of said objects, **characterized in that** it comprises a circuit (10) for processing said at least one first image signal and said at least one second image signal by means of correlation of the said image signals, and **in that** said processing circuit is configured as a cellular neural network (CNN).

2. The system according to Claim 1, **characterized in that** it comprises said image sensor (1) integrated with said cellular neural network (CNN).

3. The system according to Claim 1 or Claim 2, **characterized in that** it comprises said image sensor (1) and said processing circuit (10) integrated on a single chip.

4. The system according to any one of Claims 1 to 3, **characterized in that** it comprises said image sensor (1) and said processing circuit (10) configured to acquire the input information and carry out analysis thereof in real time.

5. The system according to any one of Claims 1 to 4, **characterized in that** said image sensor (1) and/or said processing circuit (10) are built using VLSI CMOS technologies.

6. The system according to Claim 1, **characterized in that** said cellular neural network comprises a matrix of cells ($C_{ij}$), each cell of said matrix being locally interconnected to all the cells surrounding it and interacting with them by means of programmable-parameter values and threshold values.

7. The system according to Claim 1, **characterized in that** said processing circuit (10) comprises:

   - at least one analog internal memory (12) for temporary storage of the values assumed by said at least one first image signal and said at least one second image signal; and
   - digital registers (13) for storing the programmable parameters of the cellular neural network.

8. The system according to Claim 7, **characterized in that** said processing circuit (10) further comprises:

   - programmable digital memories (15);
   - logic controllers (16) of peripherals, which are able to act as decoders of the information resulting from the processes carried out by the cells of the circuit on the images considered; and
   - input/output circuits (17) for interfacing the chip and enabling external programming thereof.

9. The system according to Claim 7 or Claim 8, **characterized in that** the characteristic values of the dynamic evolution of the system from an initial state to the condition of stability are stored in said at least one analog internal memory (12).

10. The system according to any one of the preceding claims, **characterized in that** said at least one first image signal (2) and said at least one second image signal (3) are organized according to pixels, and **in that** the system is configured to store said at least one first image signal (2) and said at least one second image signal (3), associating to each pixel thereof at least one voltage analog value attributed to a respective cell of the cellular neural network.

11. A process for analysis of surface defects of objects, **characterized in that** it comprises the operations of:

   - acquiring at least one first image (2) and said at least one second image (3) of the surface of an object, said at least one first image and said at least one second image identifying a stereoscopic vision of said surface; and
   - performing (10) a correlation of said at least one first image and said at least one second image, the result of said correlation being indicative of the characteristics of depth of said surface, said operation of correlation being performed by means of a cellular neural network.

12. The process according to Claim 11, **characterized in that** it comprises the operation of acquiring said images point by point, and **in that** said correlation is made point by point.

13. The process according to either Claim 11 or Claim 12, **characterized in that** it comprises the operation of applying, to said at least one first image and said at least one second image, at least one between:

   - a first algorithm (30) for identification and surface characterization of a possible defect; and
   - a second algorithm (40) for determination of the depth map of said defect, using the visual technique of stereoscopy.

14. The process according to Claim 13, **characterized in that** said first algorithm for identifying the defect comprises the operations of:

   - thresholding of said images;
   - contour detection of said images;
   - noise removal;
   - hollow filling; and
   - calculation of the sum of the pixels that remain active.

15. The process according to either Claim 13 or Claim 14, **characterized in that** said first algorithm for identifying the surface defect performs a characterization of the static image on the basis of two images, a right-hand image ($P_R$) and a left-hand image ($P_L$).

16. The process according to Claim 11 or Claim 13, **characterized in that** it comprises the operation of applying, to said first image (2) and said second image (3), a series of templates that are able to extract the defect and isolate it from the rest of the image.

17. The process according to Claim 16, **characterized in that** said templates are chosen from among the group made up of:

- a first template (Edge Detection - 32a and 32b), which is able to extract the contours of the defect, returning an image in shades of grey or in colour;
- a second template (Erosion - 33a and 33b), which is able to erode the objects of larger dimensions with the purpose of eliminating the noise;
- a third template (Small-Object Remover template - "Small Killer" - 34a and 34b), which is able to remove the objects of smaller dimensions with the purpose of eliminating any noise that is present in isolated form; and
- a fourth template (Dilation - 35a and 35b), which is able to perform a reconstruction of the image, restoring the defect to its original dimensions.

18. The process according to Claim 13, **characterized in that** said second algorithm comprises the operations of:

- superimposing the images (42a and 42b) obtained using said first algorithm on said first image (41a) and said second image (41b), using them as masks so as to obtain respective masked images (43a and 43b);
- repeatedly applying to each of the two masked images (43a and 43b), which are free from elements of disturbance, a respective template (Figdel - 44a and 44b), which are able to cancel out all the elements of the scene, leaving unaltered the masked ones that are located in an area corresponding to a possible defect;
- translating (45) one between said first image and said second image until one of said images is superimposed on the other between said first image and said second image;
- calculating the difference (46), pixel by pixel, between the other between said first image and each of the images obtained by translating said one between said first image and said second image, thus finding a series of images; and
- determining (58) the pixels which, among the series of images found, present a minimum value and which represent the correlated pixels, and hence determine, by repeating this process for each pixel, the complete depth map of the defect.

19. The process according to Claim 18, **characterized in that** it comprises the operation of performing an average (47) of the levels of brightness of the area surrounding each pixel, attributing the value thereof to the central pixel of the said area.

20. The process according to any one of Claims 11 to 19, **characterized in that**, in said at least one first image (2) and said at least one second image (3), a reconstruction of correlated pixels is made, determining at least one between the complete depth maps of the defect and the three-dimensional image of said defect.

21. The process according to any one of Claims 11 to 20, **characterized in that** it comprises the operation of acquiring said at least one first image (2) and said at least one second image (3) as images at successive points in time of a moving object.

Fig_1

$P(XYZ)$

$P_L(x,y,z)$     $P_R(x,y,z)$

$P_L(x,y,z)$     $P_R(x,y,z)$

Fig_2

Fig_3

Fig_4

# Fig_5

30

31a          31b
32a          32b
33a          33b
34a          34b
35a          35b
36a          36b

# Fig_6

40
41a   42a    41b   42b
43a          43b
44a          44b
45
46
N step       47
             48
             49

# Fig_7a

31b
31a

32a  33a

34a
35a

36a

EP 1 255 224 A1

# Fig_7b

31a

31b

37a

Fig_8

Fig_9

Fig_10

**European Patent Office**

**EUROPEAN SEARCH REPORT**

Application Number

EP 01 83 0289

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | OCCHIPINTI L ET AL: "Defects detection and characterization by using cellular neural networks" ISCAS 2001. THE 2001 IEEE INTERNATIONAL SYMPOSIUM ON CIRCUITS AND SYSTEMS (CAT. NO.01CH37196), ISCAS 2001. THE 2001 IEEE INTERNATIONAL SYMPOSIUM ON CIRCUITS AND SYSTEMS, SYDNEY, NSW, AUSTRALIA, 6-9 MAY 2001, pages 481-484 vol. 2, XP002180447 2001, Piscataway, NJ, USA, IEEE, USA ISBN: 0-7803-6685-9 * the whole document * | 1-21 | G06N3/063 G06T7/00 G01N21/88 |
| A | YINGEN XIONG: "Online inspection for parts in intelligent manufacturing system" APPLICATIONS OF ARTIFICIAL NEURAL NETWORKS IN IMAGE PROCESSING V, SAN JOSE, CA, USA, 27-28 JAN. 2000, vol. 3962, pages 224-234, XP001029998 Proceedings of the SPIE - The International Society for Optical Engineering, 2000, SPIE-Int. Soc. Opt. Eng, USA ISSN: 0277-786X * the whole document * | 1-21 | |
| A | PERFETTI R ET AL: "ANALOGIC CNN ALGORITHMS FOR TEXTILE APPLICATIONS" INTERNATIONAL JOURNAL OF CIRCUIT THEORY & APPLICATIONS, CHICHESTER, GB, vol. 28, no. 1, January 2000 (2000-01), pages 77-85, XP001030128 * the whole document * -/-- | 1-21 | |

TECHNICAL FIELDS SEARCHED (Int.Cl.7)

G06N
G06T
G01N

The present search report has been drawn up for all claims

| Place of search | Date of completion of the search | Examiner |
|---|---|---|
| THE HAGUE | 18 October 2001 | Verdoodt, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**European Patent Office**

# EUROPEAN SEARCH REPORT

Application Number

EP 01 83 0289

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | M.SALERNO ET AL: "Design of a dedicated CNN chip for autonomous robot navigation" PROCEEDINGS OF THE 6TH IEEE INTERNATOINAL WORKSHOP ON CELLULAR NEURAL NETWORKS AND THEIR APPLICATIONS (CNNA 2000), 23 May 2000 (2000-05-23), pages 225-228, XP002180448 Catania, Italy * the whole document * | 1 | |
| A | PRECIADO V M ET AL: "Real-time inspection of metal laminates by means of CNN's" MACHINE VISION APPLICATIONS IN INDUSTRIAL INSPECTIONS IX;SAN JOSE, CA, UNITED STATES JAN 22-23 2001, vol. 4301, 2001, pages 260-270, XP001029997 Proc SPIE Int Soc Opt Eng;Proceedings of SPIE – The International Society for Optical Engineering 2001 * the whole document * | 1 | |
| D,A | ROSKA T ET AL: "Review of CMOS implementations of the CNN universal machine-type visual microprocessors" PROCEEDINGS OF THE IEEE 2000 INTERNAITONAL SYMPOSIUM ON CIRCUITS AND SYSTEMS;GENEVA, SWITZ MAY 28-MAY 31 2000, vol. 2, 2000, pages II-120 – II – 123, XP002180450 Proc IEEE Int Symp Circuits Syst;Proceedings – IEEE International Symposium on Circuits and Systems 2000 IEEE, Piscataway, NJ, USA * the whole document * | 2,3,5 | TECHNICAL FIELDS SEARCHED (Int.Cl.7) |

The present search report has been drawn up for all claims

| Place of search | Date of completion of the search | Examiner |
|---|---|---|
| THE HAGUE | 18 October 2001 | Verdoodt, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)